# EUROPÄISCHE PATENTSCHRIFT

(11) **EP 1 215 413 B1**
(45) Veröffentlichungstag und Bekanntmachung des Hinweises auf die Patenterteilung: **20.02.2008**
(21) Anmeldenummer: 01127210.1
(22) Anmeldetag: 16.11.2001
(51) Int. Cl.: F16F 9/512, F16F 9/46, B60G 17/04, B60G 17/08

(54) **Regelbarer Schwingungsdämpfer mit einer Dämpfungskraftsteuerung**
Controllable vibration damper comprising a damping force adjusting device
Amortisseur de vibrations réglable ayant un dispositif de réglage de la force d'amortissement

(30) Priorität: 16.12.2000 DE 10062999
(43) Veröffentlichungstag der Anmeldung: 19.06.2002
(73) Patentinhaber: ThyssenKrupp Bilstein Suspension GmbH, 58256 Ennepetal (DE)
(72) Erfinder: Preukschat, Alfred, Dipl.-Ing., 53639 Königswinter (DE); Adamek, Jürgen, Dr., 58256 Ennepetal (DE)
(74) Vertreter: Adams, Steffen

(56) Entgegenhaltungen:
- EP-A- 0 399 326
- DE-A- 19 711 293
- DE-C- 19 753 515
- DE-U- 9 305 783

## Beschreibung

Die Erfindung betrifft einen regelbaren Schwingungsdämpfer mit einer Dämpfkraftsteuerung insbesondere für Kraftfahrzeuge nach dem Oberbegriff der Ansprüche 1 und 10.

Es sind regelbare hydraulische Schwingungsdämpfer mit Ventileinrichtungen bekannt, die die Zug- und Druckdämpfung während des Betriebes zwischen weich und hart umzuschalten in der Lage sind. Derartige Schwingungsdämpfer werden in der DE-A-38 03 888 beschrieben.

Nachteilig können derartige Schwingungsdämpfer aufgrund ihrer Konstruktionssystematik nur zwischen hart und weich dämpfen. Dadurch sind die Möglichkeiten der Steuerung begrenzt. Auch der Fahrkomfort bei Fahrzeugen mit derartigen Schwingungsdämpfern kann nur begrenzt erhöht werden.

Aus DE 93 05 783 U1 ist ein Schwingungsdämpfer mit Dämpfungskraftsteuerung für Fahrzeuge bekannt, bei dem die Dämpfungskraft in der Zug- und Druckstufe des Schwingungsdämpfers stufenlos mittels Drosselventilen verstellt werden kann. Hierzu ist gemäß einer Ausführungsform jeweils in der Zug- und in der Druckstufe ein verstellbares Drosselventil vorgesehen. Jedes dieser Drosselventile ist hydraulisch in Reihe geschaltet mit einem reinen Rückschlagventil. Die Rückschlagventile dienen ausschließlich der Verteilung der Strömung der Dämpfungsfllüssigkeit auf die Zugstufe bzw. auf die Druckstufe.

Aus EP 0 399 326 A2 ist ein Stoßdämpfer mit Dämpfungskraftsteuerung für Fahrzeuge bekannt, bei dem die Dämpfungskraft mittels eines durch einen Elektromagneten verschiebbaren Steuerschiebers gesteuert wird. Ein erster Drosseldurchlass ist im Körper des Dämpferkolbens vorgesehen. Ein weiterer Drosseldurchlass ist in dem gegenüber dem Dämpferkolbenkörper verschiebbaren Steuerschieber vorgesehen. Bei einem Defekt, d.h. dann, wenn z.B. durch einen Stromausfall der Steuerschieber den ersten Drosseldurchlass verschließt, stellt der weitere Drosseldurchlass einen durchströmbaren Drosselquerschnitt zu Verfügung.

Der Erfindung liegt die Aufgabe zugrunde, regelbare Schwingungsdämpfer derartig zu gestalten, dass auch Zwischenwerte zwischen hart und weich gesteuert werden können, ohne dass unnötig geringe oder nicht erreichbare Steuerzeiten für die Verstellung der Ventileinheiten erforderlich werden.

Diese Aufgabe wird durch die Merkmale der unabhängigen Ansprüche 1 und 10 gelöst. Vorteilhafte Aus- und Weiterbildungen sind in den Ansprüchen 2 bis 9 und 11 bis 16 beschrieben.

Die mit der Erfindung erzielten Vorteile liegen insbesondere darin, dass mit einfachen Mitteln eine kontinuierliche Dämpfung zwischen hart und weich erzielt werden kann.

Dabei ist es möglich, dass die Steuerzeiten für die Verstelleinrichtungen so lang gehalten werden können, dass die Einrichtung mit vertretbarem Aufwand für die Bauteile und mit geringer benötigter Stellenergie herstellbar wird.

Besonders vorteilhaft kann die Regeleinrichtung für den Schwingungsdämpfer baukastenhaft für die verschiedensten Fahrzeuge mit den verschiedensten Dämpfungscharakteristiken zusammengestellt werden. Da es keine Umschaltstöße beim Schalten zwischen weich und hart bzw. hart und weich mehr gibt, wird der Fahrkomfort wesentlich erhöht.

Unterschiedliche Ausführungsbeispiele der Erfindung sind in der Zeichnung dargestellt und werden im Folgenden näher beschrieben. Es zeigen
- Fig. 1: eine erste Ausführungsform der Erfindung gemäß Anspruch 1;
- Fig. 2: eine gegenüber Fig. 1 abgeänderte Ausführungsform;
- Fig. 3 bis 6: unterschiedliche erfindungsgemäße Ventilverschaltungen gemäß Anspruch 10;
- Fig. 7 und 8: Anordnungen von Regelungen im Federzylinder und im Zwei-Kammer-Wirkprinzip des Schwingungsdämpfers und
- Fig. 9: die Anordnung der Regelung in einem Arbeitskolben eines Schwingungsdämpfers.

Die Figuren stellen schematische Darstellungen der einzelnen Schaltungen für den regelbaren Schwingungsdämpfer dar. Der Schwingungsdämpfer besteht aus einem Stoßdämpferrohr 1, in das oszillierend eine Kolbenstange 2, an dessen Ende sich ein Kolben 3 befindet, eintaucht. Zum Volumenausgleich, hervorgerufen durch die durch die Kolbenstange verdrängte Hydraulikflüssigkeit, ist ein Ausgleichsbehälter 4, vorgespanntes Gas beinhaltend, vorgesehen. Der Ausgleichsbehälter 4 kann auch integraler Bestandteil des Stoßdämpfers sein.

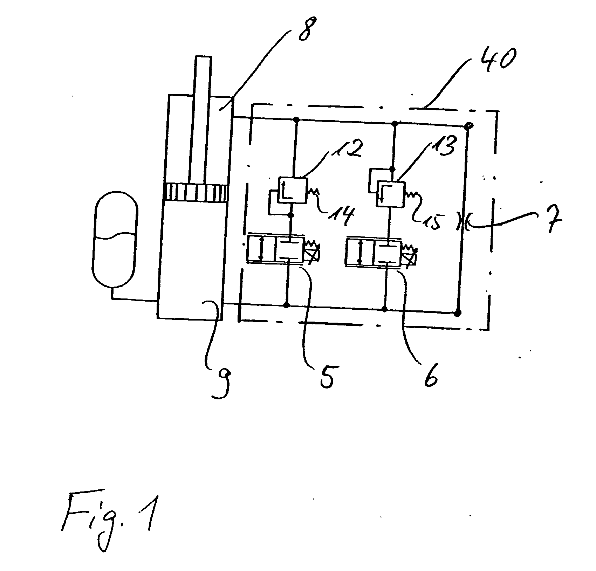

Fig. 1 zeigt eine erste Schaltung für den erfindungsgemäßen Schwingungsdämpfer. Regelventile 5, 6 sind hydraulisch parallel zueinander angeordnet. Weiterhin hydraulisch parallel zu den Regelventilen 5, 6 liegt eine Bypassdrossel 7 mit einem sehr kleinen Drosselquerschnitt. Diese Bypassdrossel 7, die ebenso Bestandteil eines oder beider Regelventile sein kann, dient dazu, eine Minimalöffnung bei geschlossenen Regelventilen zur Verfügung zu stellen und damit ein hydraulisches Blockieren des Dämpfers zu verhindern. Die Regelventile 5, 6 regeln kontinuierlich zwischen den Schaltstellungen geschlossen und in einer Durchflussrichtung geöffnet. Das Regelventil 5 regelt die Bewegung in Druckrichtung der Kolbenstange 2, das Regelventil 6 in Zugrichtung. Die Durchflussmenge ergibt sich zum einen aufgrund der Druckdifferenz zwischen dem durch den Kolben 3 getrennten oberen Arbeitsraum 8 und dem unteren Arbeitsraum 9 und zum anderen durch das mehr oder minder weite Schließen der Regelventile 5, 6 mittels einer Durchflussstelleinrichtung, wie sie z.B. aus der DE 100 40 518 bekannt sind.

Bei der Ausführungsform gemäß Fig. 1 sind federbelastete Rückschlagventile 12, 13 vorgesehen, die hydraulisch in Reihe zu den beiden Regelventilen 5, 6 angeordnet sind. Derartige federbelastete Rückschlagventile öffnen sich bei höher werdender Druckdifferenz zwischen dem oberen Arbeitsraum 8 und dem unteren Arbeitsraum 9 mehr oder minder weit. Mit derartigen federbelasteten Rückschlagventilen kann durch Ausbildung der Belastungsfedern 14, 15 oder Federventilen eine geeignete Kennung für die Dämpfung des Schwingungsdämpfers, in Zug- und Druckrichtung unterschiedlich, eingestellt werden.

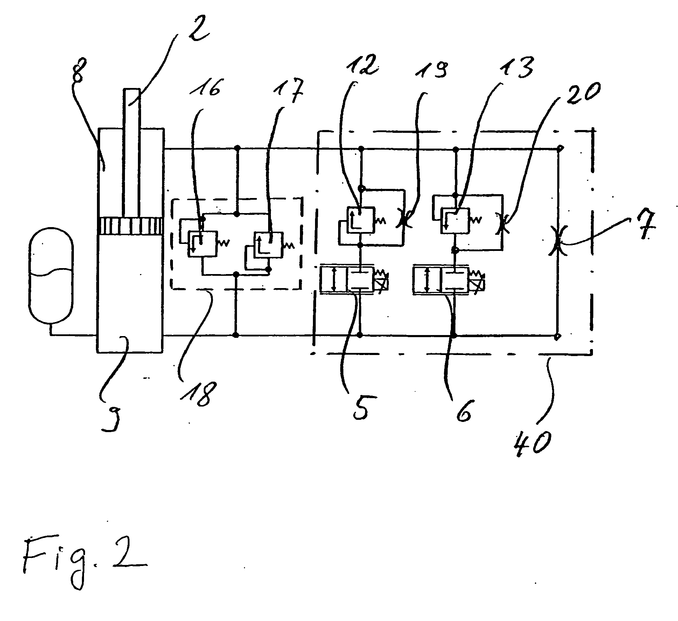

Fig. 2 zeigt eine Weiterentwicklung der Regelung für einen Schwingungsdämpfer gemäß Fig. 1. Bei dem hier gezeigten Schaltschema sind parallel zu den regelbaren federbelasteten Rückschlagventilen 12, 13 ungeregelte federbelastete Rückschlagventile 16, 17 in einer Ventileinheit 18 zusammengefasst. Die federbelasteten Rückschlagventile 16, 17 sind in zwei parallelen hydraulischen Wegen angeordnet und arbeiten unabhängig voneinander in Zugrichtung bzw. Druckrichtung der Kolbenstange 2. Diese Ventileinheit 18 ist auch in den Stoßdämpferkolben 3 integrierbar und stellt einen normalen federbelasteten Arbeitskolben dar. Bei der Ausbildung gemäß Fig. 2 ist für die Ventileinheit 18 die Kennung "hart" vorzusehen. Die federbelasteten Rückschlagventile 12, 13 sind mit der Kennung "weich" auszubilden. Über die Regelventile 5, 6 kann nun sowohl in der Zugstufe als auch in der Druckstufe unabhängig voneinander kontinuierlich zwischen den Ventilkennungen "hart" und "weich" verstellt werden. Zusätzlich zur Bypassdrossel 7 können noch separate Bypassdrosseln 19, 20 parallel zu den federbelasteten Rückschlagventilen 12, 13 geschaltet sein.

Bei dieser Schaltungsausführung wird sichergestellt, dass bei Ausfall der Elektrik oder Elektronik stets ein sicheres Fahrverhalten gewährleistet ist. Bei Ausfall der Elektrik oder Elektronik schließen grundsätzlich die Regelventile 5, 6. In diesem Fall wird das Fahrverhalten sicher durch die mechanisch wirkenden federbelasteten Rückschlagventile 16, 17 in der Ventileinheit 18 mit harter Kennung, also vorzugsweise im Arbeitskolben 3, geregelt.

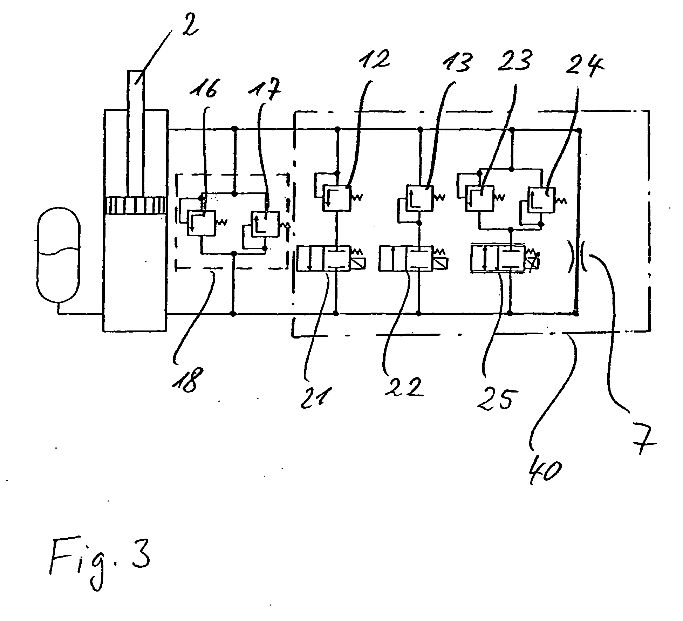

Im Ausführungsbeispiel nach Fig. 3 sind parallel zur Ventileinheit 18 mit den nicht stellbaren federbelasteten Rückschlagventilen 16, 17 mit harter Kennung zwei entsprechende Rückschlagventile 12, 13 mit weicher Kennung geschaltet, die über zugehörige hydraulische Schalter 21, 22 zugeschaltet werden können, sodass alternativ für die Zugrichtung oder die Druckrichtung der Kolbenstange 2 eine weiche Kennung geschaltet werden kann. Parallel wiederum zu diesen sind zwei weitere parallele, in einer Richtung gesperrte Rückschlagventile 23, 24 mit der Kennung weich geschaltet, die über ein Regelventil 25 geregelt angesteuert werden können. Durch diese Schaltung können ebenfalls beliebig unabhängig voneinander für die Zugrichtung und die Druckrichtung alle Dämpfungskennungen zwischen hart und weich geschaltet werden.

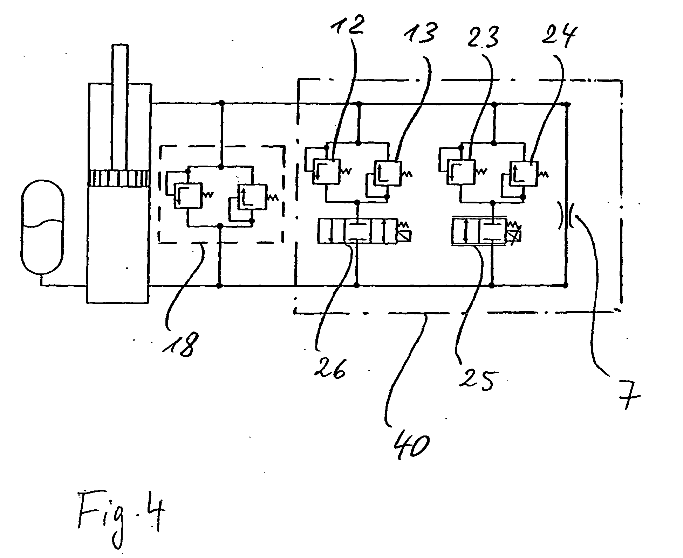

Die gleiche Schaltung wie in Fig. 3 wird erreicht durch eine Regelung gemäß Fig. 4. Hier werden die weichen Rückschlagventile 12, 13 anstatt mit zwei einzelnen Schaltventilen mit einem 2/3-Schaltventil 26 angesteuert.

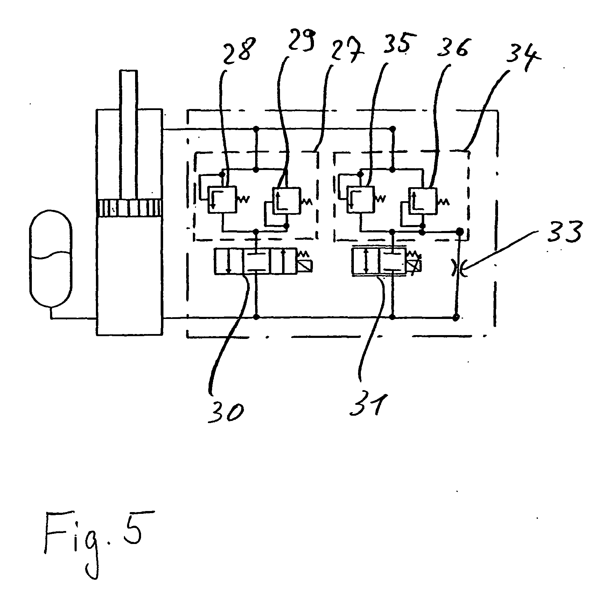

In der Ausführungsform gemäß Fig. 5 ist dem Regelventil 31 eine Ventileinheit 34 mit federbelasteten gegensinnig wirkenden Rückschlagventilen 35, 36 vorgeschaltet. Diese Rückschlagventile 35, 36 haben ebenfalls die Kennung weich, werden jedoch durch das Regelventil 31 zwischen hart und weich geregelt. Die Bypassdrossel 33, welche, wie in Fig. 5 dargestellt, parallel zum Regelventil 31 angeordnet und/oder parallel zum Schaltventil 30 und/oder parallel zu den beiden Reihenschaltungen aus Regel- bzw. Schaltventil und den Ventileinheiten 35, 36 bzw. 28, 29 sein kann, dient wiederum zum Sicherstellen eines minimalen Durchflusses bei geschlossenem 2/3-Schaltventil 30 und geschlossenem Regelventil 31.

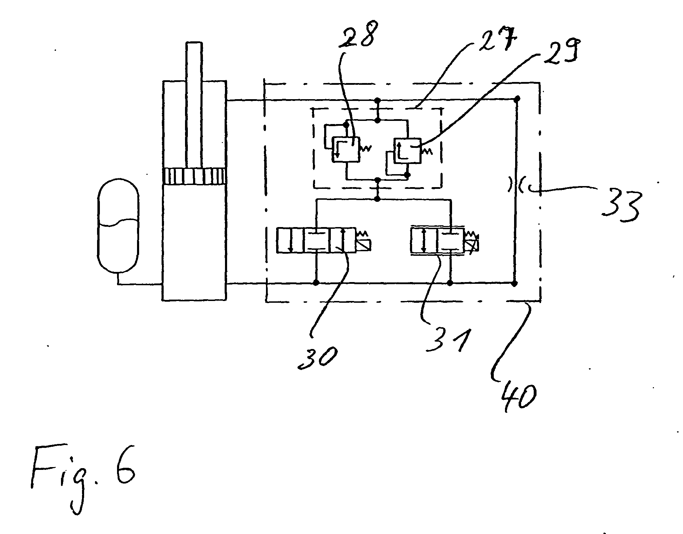

Im Ausführungsbeispiel nach Fig. 6 wird eine Ventileinheit 27 mit zwei in unterschiedlicher Richtung arbeitenden federbelasteten Rückschlagventilen 28, 29 mit weicher Kennung über ein 2/3-Schaltventil 30 alternativ in zwei Durchflussrichtungen geschaltet oder gesperrt. Bei der Ausbildung nach Fig. 6 ist das Regelventil 31 jedoch parallel zum 2/3-Schaltventil 30 geschaltet, sodass diesem stets die Ventileinheit 27 mit den Rückschlagventilen 28, 29 mit weicher Kennung in Reihe vorgeschaltet liegt. Auch bei der Ausbildung nach Fig. 6 dient eine Bypassdrossel 33 wiederum zum Garantieren eines minimalen freien Durchflusses.

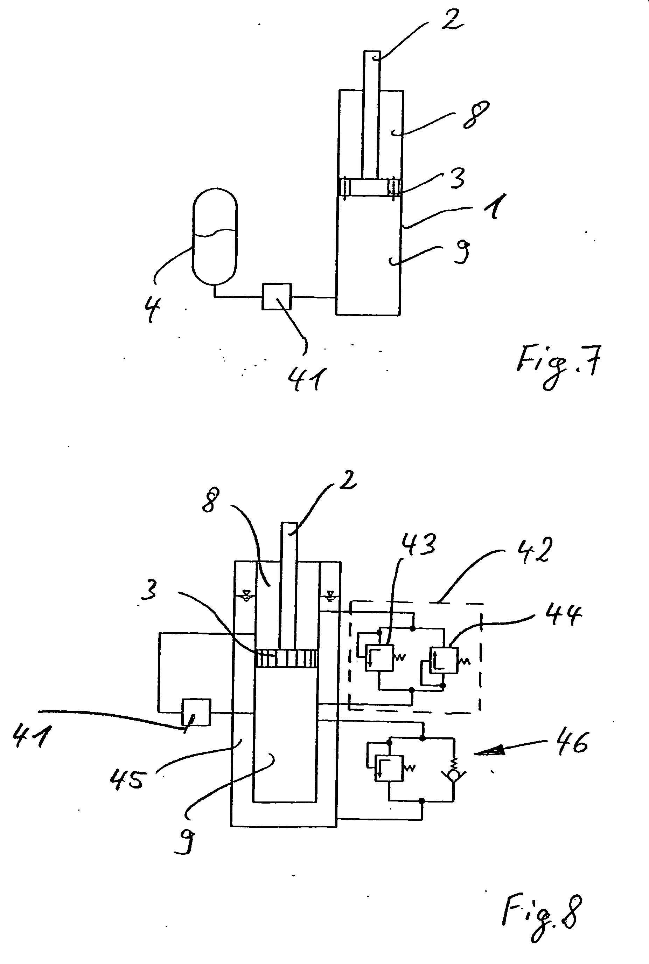

Die Anordnung der in den Fig. 1 bis 6 strichpunktiert dargestellten Regeleinheiten 40 und eventuell auch der Ventileinheiten 18, 27, 34 sind in den Fig. 7 bis 9 dargestellt. Die Regeleinheit 40, die auch mit einer Ventileinheit 18, 27, 34 verbunden sein kann, wird vorzugsweise als abgeschlossener Ventilblock 41 ausgebildet.

Nach Fig. 7 liegt der Ventilblock 41 hydraulisch zwischen dem unteren Arbeitsraum 9 und dem Ausgleichsbehälter 4.

Nach der Fig. 8 ist bei einem Zweirohrstoßdämpfer eine Ventileinheit 42 mit zwei federbelasteten Rückschlagventilen 43, 44 in den Kolben 3 des Stoßdämpfers integriert. Zwischen dem unteren Arbeitsraum 9 und dem als Ausgleichsbehälter dienenden Ringraum 45 ist ein einseitig wirkendes, federbelastetes Ventil als Bodenventil 46 eingesetzt. Die Regeleinheit 40 ist, vorzugsweise wieder als Ventilblock 41 ausgebildet, extern am Stoßdämpfer angeordnet und hydraulisch zwischen die Arbeitsräume 8 und 9 geschaltet.

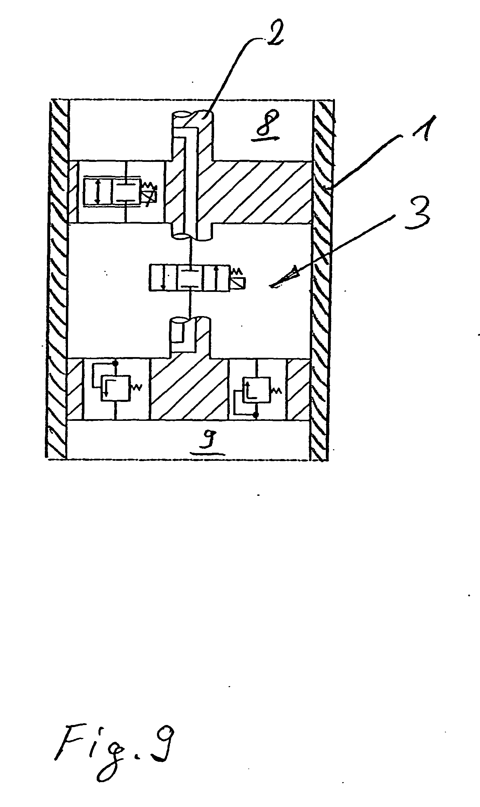

Bei der Ausbildung nach Fig. 9 sind die hydraulischen Schalt- und Regelelemente nach einer Schaltung ähnlich Fig. 6 in einen Kolben 3 eines Einrohrstoßdämpfers integriert. Die feste Bypassdrossel ist in Fig. 9 nicht dargestellt, da sie sich in einer anderen Schnittebene als der in Fig. 9 dargestellten Schnittebene befindet.

### Neue Bezugszeichenliste

- 1.: Stoßdämpferrohr
- 2.: Kolbenstange
- 3.: Kolben
- 4.: Ausgleichsbehälter
- 5.: Regelventil
- 6.: Regelventil
- 7.: Bypassdrossel
- 8.: Arbeitsraum
- 9.: Arbeitsraum
- 12.: Rückschlagventil
- 13.: Rückschlagventil
- 14.: Belastungsfeder
- 15.: Belastungsfeder
- 16.: Rückschlagventil
- 17.: Rückschlagventil
- 18.: Ventileinheit
- 19.: Bypassdrossel
- 20.: Bypassdrossel
- 21.: Schalter
- 22.: Schalter
- 23.: Rückschlagventil
- 24.: Rückschlagventil
- 25.: Regelventil
- 26.: 2/3-Schaltventil
- 27.: Ventileinheit
- 28.: Rückschlagventil
- 29.: Rückschlagventil
- 30.: 2/3-Schaltventil
- 31.: Regelventil
- 33.: Bypassdrossel
- 34.: Ventileinheit
- 35.: Rückschlagventil
- 36.: Rückschlagventil
- 40.: Regeleinheit
- 41.: Ventilblock
- 42.: Ventileinheit
- 43.: Rückschlagventil
- 44.: Rückschlagventil
- 45.: Ringraum
- 46.: Bodenventil

## Patentansprüche

1. Regelbarer Schwingungsdämpfer mit einer Dämpfungskraftsteuerung, insbesondere für Kraftfahrzeuge, wobei eine Ventileinrichtung mit mindestens einem Dämpfungselement jeweils für die Zug- und Druckdämpfung vorgesehen ist, wobei wenigstens eine der Ventileinrichtungen als Regelventil (5, 6, 25, 31) mit einem veränderbaren Durchflusswiderstand versehen ist und wenigstens eine feste Bypassdrossel (7, 33) mit einem kleinen Durchflussquerschnitt hydraulisch parallel wirkend zu den Ventileinrichtungen angeordnet ist, **dadurch gekennzeichnet, dass** für die Zugdämpfung und für die Druckdämpfung jeweils eine Ventileinrichtung als Regelventil (5, 6) mit veränderbarer Durchflussdrossel versehen ist, wobei die Regelventile (5, 6) hydraulisch in Reihe mit federbelasteten Rückschlagventilen (12, 13) angeordnet sind, über welche die Dämpfungskennung des Schwingungsdämpfers einstellbar ist.

2. Regelbarer Schwingungsdämpfer nach Anspruch 1, **dadurch gekennzeichnet, dass** die federbelasteten Rückschlagventile (12, 13, 23, 24) als Ventile mit Belastungsfedern (14, 15) oder als Federventile ausgebildet sind.

3. Regelbarer Schwingungsdämpfer nach Anspruch 2, **dadurch gekennzeichnet, dass** die federbelasteten Rückschlagventile (12, 13, 23, 24) eine geeignete Kennung für die Dämpfung des Schwingungsdämpfers aufweisen, die in Zug- und Druckrichtung unterschiedlich eingestellt ist.

4. Regelbarer Schwingungsdämpfer nach einem der voranstehenden Ansprüche, **dadurch gekennzeichnet, dass** die federbelasteten Rückschlagventile (12, 13, 23, 24) über die Regelventile (5, 6) geregelt ansteuerbar sind und parallel zu diesen ungeregelte federbelastete Rückschlagventile (16, 17) angeordnet sind.

5. Regelbarer Schwingungsdämpfer nach Anspruch 4, **dadurch gekennzeichnet, dass** die ungeregelten federbelasteten Rückschlagventile (16, 17) in einer Ventileinheit (18) zusammengefasst sind.

6. Regelbarer Schwingungsdämpfer nach Anspruch 4 oder 5, **dadurch gekennzeichnet, dass** die ungeregelten federbelasteten Rückschlagventile (16, 17) in zwei parallelen hydraulischen Wegen angeordnet sind und unabhängig voneinander in Zugrichtung bzw. Druckrichtung der Kolbenstange (2) arbeiten.

7. Regelbarer Schwingungsdämpfer nach den Ansprüchen 4 bis 6, **dadurch gekennzeichnet, dass** die ungeregelten federbelasteten Rückschlagventile (16, 17) die Kennung "hart" und die geregelt ansteuerbaren federbelasteten Rückschlagventile (12, 13) die Kennung "weich" aufweisen.

8. Regelbarer Schwingungsdämpfer nach den Ansprüchen 1 bis 7, **dadurch gekennzeichnet, dass** zusätzlich zu der Bypassdrossel (7) weitere separate Bypassdrosseln (19, 20) vorgesehen sind, die parallel zu den federbelasteten Rückschlagventilen (12, 13) angeordnet sind.

9. Regelbarer Schwingungsdämpfer nach den Ansprüchen 1 bis 8, **dadurch gekennzeichnet, dass** die Regelventile (5, 6, 21, 22, 25) so ausgebildet sind, dass sie bei Ausfall der Elektrik oder Elektronik grundsätzlich schließen (Fail-Safe-Funktion).

10. Regelbarer Schwingungsdämpfer mit einer Dämpfungskraftsteuerung, insbesondere für Kraftfahrzeuge, wobei eine Ventileinrichtung mit mindestens einem Dämpfungselement jeweils für die Zug- und Druckdämpfung vorgesehen ist, wobei wenigstens eine der Ventileinrichtungen als Regelventil (5, 6, 25, 31) mit einem veränderbaren Durchflusswiderstand versehen ist und wenigstens eine feste Bypassdrossel (7, 33) mit einem kleinen Durchflussquerschnitt hydraulisch parallel wirkend zu den Ventileinrichtungen angeordnet ist, **dadurch gekennzeichnet, dass** mindestens eine Ventileinrichtung als Regelventil (25, 31) mit in Reihe zu diesem angeordneten, zueinander parallelen federbelasteten Rückschlagventilen (23, 24, 35, 36) ausgebildet ist, wobei das Regelventil (25, 31) in Zug- und Druckrichtung durchströmt werden kann, und parallel zu diesem Regelventil (25, 31) Schaltventile (21, 22, 26, 30) angeordnet sind, über die in der jeweils nicht geregelten Strömungsrichtung federbelastete Rückschlagventile (12, 13, 28, 29) zugeschaltet werden können, welche eine weiche Dämpfungscharakteristik aufweisen.

11. Regelbarer Schwingungsdämpfer nach Anspruch 10, **dadurch gekennzeichnet, dass** die federbelasteten Rückschlagventile (12, 13) als nicht stellbare Rückschlagventile mit weicher Kennung ausgebildet sind, dass parallel zu den Rückschlagventilen (12, 13) nicht stellbare Rückschlagventile (16, 17) mit harter Kennung angeordnet sind, wobei die mit weicher Kennung ausgebildeten Rückschlagventile (12, 13) über zugehörige hydraulische Schalter (21, 22) zugeschaltet werden können, und dass parallel zu den Rückschlagventilen (12, 13) mit weicher Kennung zwei weitere, zueinander parallele, in einer Richtung gesperrte Rückschlagventile (23, 24) mit weicher Kennung angeordnet sind, die über ein Regelventil (25) geregelt angesteuert werden können.

12. Regelbarer Schwingungsdämpfer nach Anspruch 10 oder 11, **dadurch gekennzeichnet, dass** die hydraulischen Schalter für das Zuschalten der Rückschlagventile (12, 13) mit weicher Kennung durch zwei einzelne Schaltventile gebildet sind.

13. Regelbarer Schwingungsdämpfer nach Anspruch 10 oder 11, **dadurch gekennzeichnet, dass** die hydraulischen Schalter für das Zuschalten der Rückschlagventile (12, 13) mit weicher Kennung durch ein einziges 2/3-Schaltventil (26) gebildet sind.

14. Regelbarer Schwingungsdämpfer nach den Ansprüchen 1 bis 13, **dadurch gekennzeichnet, dass** die Ventil-, Drossel- und/oder Dämpfungseinrichtungen in einem separaten Bauteil, vorzugsweise als Ventilblock (41) außerhalb des Schwingungsdämpfers angeordnet und über Druckmittelleitungen mit dem Schwingungsdämpfer verbunden sind.

15. Regelbarer Schwingungsdämpfer nach den Ansprüchen 1 bis 13, **dadurch gekennzeichnet, dass** die Ventil-, Drossel- und/oder Dämpfungseinrichtungen im oder am Kolben (3) des Stoßdämpfers angeordnet sind.

16. Regelbarer Schwingungsdämpfer nach den Ansprüchen 1 bis 13, **dadurch gekennzeichnet, dass** die Ventil-, Drossel- und/oder Dämpfungseinrichtungen im oder am Bodenventil (46) des Stoßdämpfers angeordnet sind.

## Claims

1. Controllable vibration damper having damping force control, in particular for motor vehicles, wherein a valve device having at least one damping element is provided in each case for tension and pressure damping, wherein at least one of the valve devices is provided as a control valve (5, 6, 25, 31) having a variable flow resistance and at least one fixed bypass restrictor (7, 33) having a small flow cross-section is disposed so as to be active hydraulically in parallel with respect to the valve devices, **characterised in that** a valve device is provided as a control valve (5, 6) with a variable flow restrictor in each case for the tension damping and pressure damping, wherein the control valves (5, 6) are disposed hydraulically in series with spring-loaded non-return valves (12, 13) via which the damping characteristics of the vibration damper can be adjusted.

2. Controllable vibration damper as claimed in Claim 1, **characterised in that** the spring-loaded non-return valves (12, 13, 23, 24) are formed as valves having load springs (14, 15) or as spring valves.

3. Controllable vibration damper as claimed in Claim 2, **characterised in that** the spring-loaded non-return valves (12, 13, 23, 24) have a suitable characteristic for the damping of the vibration damper which is adjusted so as to be different in the traction direction and the compression direction.

4. Controllable vibration damper as claimed in any one of the preceding Claims, **characterised in that** the spring-loaded non-return valves (12, 13, 23, 24) can be actuated in a controlled manner via the control valves (5, 6) and uncontrolled spring-loaded non-return valves (16, 17) are disposed in parallel therewith.

5. Controllable vibration damper as claimed in Claim 4, **characterised in that** the uncontrolled spring-loaded non-return valves (16, 17) are combined in a valve unit (18).

6. Controllable vibration damper as claimed in Claim 4 or 5, **characterised in that** the uncontrolled spring-loaded non-return valves (16, 17) are disposed in two parallel hydraulic paths and function in a mutually independent manner in the traction direction or compression direction of the piston rod (2).

7. Controllable vibration damper as claimed in Claims 4 to 6, **characterised in that** the uncontrolled spring-loaded non-return valves (16, 17) have a "hard" characteristic and the spring-loaded non-return valves (12, 13) which can be actuated in a controlled manner have a "soft" characteristic.

8. Controllable vibration damper as claimed in Claims 1 to 7, **characterised in that** in addition to the bypass restrictor (7) further separate bypass restrictors (19, 20) are provided which are disposed in parallel with the spring-loaded non-return valves (12, 13).

9. Controllable vibration damper as claimed in Claims 1 to 8, **characterised in that** the control valves (5, 6, 21, 22, 25) are formed such that they essentially close if the electrics or electronics fail (fail-safe function).

10. Controllable vibration damper having damping force control, in particular for motor vehicles, wherein a valve device having at least one damping element is provided in each case for tension and pressure damping, wherein at least one of the valve devices is provided as a control valve (5, 6, 25, 31) having a variable flow resistance and at least one fixed bypass restrictor (7, 33) having a small flow cross-section is disposed so as to be active hydraulically in parallel with respect to the valve devices, **characterised in that** at least one valve device is formed as a control valve (25, 31) having spring-loaded non-return valves (23, 24, 35, 36) disposed in parallel with each other and in series with the control valve, wherein the control valve (25, 31) can have fluid flowing therethrough in the traction direction and compression direction, and switching valves (21, 22, 26, 30) are disposed in parallel with this control valve (25, 31), wherein spring-loaded non-return valves (12, 13, 28, 29)-which have a soft damping characteristic - can be connected in the flow direction, which is not controlled in each case, via the switching valves.

11. Controllable vibration damper as claimed in Claim 10, **characterised in that** the spring-loaded non-return valves (12, 13) are formed as non-adjustable non-return valves having a soft characteristic, **in that** non-adjustable non-return valves (16, 17) having a hard characteristic are disposed in parallel with the non-return valves (12, 13), wherein the non-return valves (12, 13) formed with a soft characteristic can be connected via dedicated hydraulic switches (21, 22), and **in that** two further, mutually parallel non-return valves (23, 24) having a soft characteristic and blocked in one direction are disposed in parallel with the non-return valves (12, 13) having a soft characteristic and can be actuated in a controlled manner via a control valve (25).

12. Controllable vibration damper as claimed in Claim 10 or 11, **characterised in that** the hydraulic switches for connecting the non-return valves (12, 13) having a soft characteristic are formed by two individual switching valves.

13. Controllable vibration damper as claimed in Claim 10 or 11, **characterised in that** the hydraulic switches for connecting the non-return valves (12, 13) having a soft characteristic are formed by a single 2-port/3-position switching valve (26).

14. Controllable vibration damper as claimed in Claims 1 to 13, **characterised in that** the valve, restrictor and/or damping devices are disposed in a separate component, preferably as a valve block (41) outside the vibration damper and are connected to the vibration damper via pressure medium conduits.

15. Controllable vibration damper as claimed in Claims 1 to 13, **characterised in that** the valve, restrictor and/or damping devices are disposed in or on the piston (3) of the shock absorber.

16. Controllable vibration damper as claimed in Claims 1 to 13, **characterised in that** the valve, restrictor and/or damping devices are disposed in or on the base valve (46) of the shock absorber.

## Revendications

1. Amortisseur réglable ayant un dispositif de réglage de la force d'amortissement, en particulier pour véhicules à moteur, dans lequel un dispositif à soupapes avec au moins un élément d'amortissement est prévu pour l'amortissement en traction et pour l'amortissement en compression, au moins l'un des dispositifs à soupapes sous la forme d'une soupape de régulation (5, 6, 25, 31) étant pourvu d'une résistance de passage modifiable, et au moins un organe d'étranglement (7, 33) de dérivation, fixe, à faible section de passage, travaillant hydrauliquement en parallèle avec les dispositifs à soupapes, étant prévu, **caractérisé en ce qu'**un dispositif à soupapes sous la forme d'une soupape de régulation (5, 6) avec un organe d'étranglement de réglage du débit, modifiable est prévu pour l'amortissement en traction et l'amortissement en compression, les soupapes de régulation (5, 6) étant disposées hydrauliquement en série avec des clapets de retenue (12, 13) chargés par ressort, grâce auxquels la caractéristique d'amortissement de l'amortisseur peut être ajustée.

2. Amortisseur réglable selon la revendication 1, **caractérisé en ce que** les clapets de retenue (12, 13, 23, 24) chargés par ressort sont réalisés sous la forme de soupapes avec ressorts de charge (14, 15) ou de soupapes à ressort.

3. Amortisseur réglable selon la revendication 2, **caractérisé en ce que** les clapets de retenue (12, 13, 23, 24) chargés par ressort présentent une caractéristique adaptée pour l'amortissement de l'amortisseur, qui est ajustée différemment en traction et en compression.

4. Amortisseur réglable selon l'une des revendications précédentes, **caractérisé en ce que** les clapets de retenue (12, 13, 23, 24) chargés par ressort peuvent être commandés en régulation par les soupapes de régulation (5, 6), et des clapets de retenue (16, 17) chargés par ressort, non régulés, sont disposés parallèlement à ceux-ci.

5. Amortisseur réglable selon la revendication 4, **caractérisé en ce que** les clapets de retenue (16, 17) chargés par ressort, non régulés, sont regroupés dans un dispositif à soupapes (18).

6. Amortisseur réglable selon la revendication 4 ou 5, **caractérisé en ce que** les clapets de retenue (16, 17) chargés par ressort, non régulés, sont agencés dans deux chemins hyudrauliques parallèles, et travaillent indépendamment l'un de l'autre dans la direction de traction, respectivement la direction de compression de la tige de piston.

7. Amortisseur réglable selon les revendications 4 à 6, **caractérisé en ce que** les clapets de retenue (16, 17) chargés par ressort, non régulés, présentent la caractéristique "dure", et les clapets de retenue (12, 13) chargés par ressort, pouvant être commandés en régulation, présentent la caractéristique "souple".

8. Amortisseur réglable selon les revendications 1 à 7, **caractérisé en ce que** des organes d'étranglement (19, 20) de dérivation, supplémentaires, séparés, sont prévus en plus de l'organe d'étranglement de dérivation (7), et sont agencés parallèlement aux clapets de retenue (12, 13) chargés par ressort.

9. Amortisseur réglable selon les revendications 1 à 8, **caractérisé en ce que** les soupapes de régulation (5, 6, 21, 22, 25) sont réalisées de telle sorte qu'elles se ferment en cas de panne électrique ou électronique (fonction de protection contre les défaillances).

10. Amortisseur réglable ayant un dispositif de réglage de la force d'amortissement, en particulier pour véhicules à moteur, dans lequel un dispositif à soupapes avec au moins un élément d'amortissement est chaque fois prévu pour l'amortissement en traction et l'amortissement en compression, au moins l'un des dispositifs à soupapes sous la forme d'une soupape de régulation (5, 6, 25, 31) étant pourvu d'une résistance de passage modifiable, et au moins un organe d'étranglement (7, 33) de dérivation, fixe, à faible section de passage, travaillant hydrauliquement en parallèle avec les dispositifs à soupapes, étant prévu, **caractérisé en ce qu'**au moins un dispositif à soupapes sous la forme d'une soupape de régulation (25, 31) est formé avec des clapets de retenue (23, 24, 35, 36) chargés par ressort, parallèles entre eux et en série avec lui, la soupape de régulation (25, 31) pouvant être passante dans la direction de traction et la direction de compression, et des soupapes de commutation (21, 22, 26, 30), par l'intermédiaire desquelles les clapets de retenue (12, 13, 28, 29) chargés par ressort, qui présentent une caractéristique d'amortissement souple, peuvent être fermés dans la direction de passage qui n'est pas réglée, sont disposées parallèlement à cette soupape de régulation (25, 31).

11. Amortisseur réglable selon la revendication 10, **caractérisé en ce que** les clapets de retenue (12, 13) chargés par ressort sont réalisés sous la forme de clapets de retenue non ajustables, avec une caractéristique plus souple, **en ce que** des clapets de retenue non ajustables (16, 17) de caractéristique plus dure sont agencés parallèlement aux clapets de retenue (12, 13), les clapets de retenue (12, 13) à caractéridstique plus souple pouvant être fermés par l'intermédiaire de commutateurs hydrauliques (21, 22) associés, et **en ce que** deux autres clapets de retenue (23, 24) bloqués dans une direction, parallèles entre eux, de caractéristique plus souple, qui peuvent être commandés en régulation par l'intermédiaire d'une soupape de régulation (25), sont disposés parallèlement aux clapets de retenue (12, 13) de caractéristique plus souple.

12. Amortisseur réglable selon la revendication 10 ou 11, **caractérisé en ce que** les commutateurs hydrauliques pour la fermeture des clapets de retenue (12, 13) de caractéristique plus souple sont formés par deux soupapes de commutation séparées.

13. Amortisseur réglable selon la revendication 10 ou 11, **caractérisé en ce que** les commutateurs hydrauliques pour la fermeture des clapets de retenue (12, 13) de caractéristique plus souple sont formés par une soupape de commutation 2/3 unique.

14. Amortisseur réglable selon les revendications 1 à 13, **caractérisé en ce que** les systèmes à soupapes, organes d'étranglement et/ou d'amortissement sont disposés dans un composant séparé, de préférence sous la forme d'un bloc-soupapes (41) à l'extérieur de l'amortisseur, et sont reliés à l'amortisseur par des conduites à agent sous pression.

15. Amortisseur réglable selon les revendications 1 à 13, **caractérisé en ce que** les systèmes à soupapes, organes d'étranglement et/ou d'amortissement sont disposés dans ou sur le piston (3) de l'amortisseur.

16. Amortisseur réglable selon les revendications 1 à 13, **caractérisé en ce que** les systèmes à soupapes, organes d'étranglement et/ou d'amortissement sont disposés dans ou sur la soupape de fond (46) de l'amortisseur.
